Europäisches Patentamt

European Patent Office

Office européen des brevets

(11) Numéro de publication: **0 209 481 B1**

## FASCICULE DE BREVET EUROPEEN

(45) Date de publication de fascicule du brevet:
**13.11.91**

(51) Int. Cl.⁵: **A01G 3/03**

(21) Numéro de dépôt: **86450015.2**

(22) Date de dépôt: **24.06.86**

(54) Sécateur automatique pour la taille de la vigne, arbres et autres.

(30) Priorité: **15.07.85 FR 8510917**

(43) Date de publication de la demande:
**21.01.87 Bulletin 87/04**

(45) Mention de la délivrance du brevet:
**13.11.91 Bulletin 91/46**

(84) Etats contractants désignés:
**AT BE CH DE FR GB IT LI LU NL SE**

(56) Documents cités:
**GB-A- 903 882**
**US-A- 3 408 875**

(73) Titulaire: **Delmas, Daniel**

**F-81140 Cahuzac sur Vere(FR)**

(72) Inventeur: **Delmas, Daniel**

**F-81140 Cahuzac sur Vere(FR)**

(74) Mandataire: **Ravina, Bernard**
**Cabinet Bernard RAVINA 24, boulevard Ri-**
**quet**
**F-31000 Toulouse(FR)**

## Description

La présente invention concerne un sécateur automatique pour la taille de la vigne, des arbres et autres.

Le sécateur automatique selon l'invention, est du type de ceux comportant un moteur électrique qui, par l'intermédiaire de différents moyens de transmission, actionne dans un mouvement de va-et-vient au moins une lame de coupe.

Les sécateurs à énergie électrique de ce type, connus jusqu'alors, présentent cependant certains inconvénients. En effet, avec le sécateur, objet du brevet US-A-3 408 875, pour effectuer un nombre de coupe sur un temps donné suffisamment important, il est nécessaire d'utiliser une vitesse de rotation du moteur électrique assez élevée.

Cette vitesse élevée ne permet pas d'obtenir au niveau de la coupe, une puissance suffisante. Ainsi ces sécateurs sont limités dans leur domaine d'application car ils ne peuvent pas couper des branches ou sarments d'un diamètre trop important avec une vitesse élevée.

D'autre part, sur les sécateurs existants, le couple de rotation de la lame mobile par rapport à son axe entre l'ouverture maximale et la fermeture totale est constant. Ceci s'avère être également un inconvénient au niveau de la coupe, il n'est pas nécessaire d'avoir un fort couple au début de la fermeture des lames et il est utile que ce couple augmente au fur et à mesure de la fermeture puisque la force que nécessite la coupe augmente.

De plus, les sécateurs électriques existant pour l'ouverture des lames utilisent un ressort qui ramène la lame brusquement dans la position d'ouverture initiale à partir de la position de fermeture complète. Le rappel en position d'ouverture est brusque et provoque chaque fois un choc qui rend l'utilisation de tels sécateurs peu agréable.

Le sécateur automatique, selon la présente invention, vise à pallier ces inconvénients en nécessitant, pour un nombre de coupes équivalent dans le temps, une vitesse du moteur électrique pus faible donnant une grande puissance de coupe, en offrant une progression du couple de rotation de la lame mobile lors de la coupe et en donnant un très bons confort d'utilisation.

A cet effet, le sécateur automatique pour la taille de la vigne, des arbres et autres, comporte un corps creux dans lequel est monté un moteur avec son réducteur, une tête montée sur l'extrémité du corps creux et dans laquelle sont montées une lame fixe et une lame mobile articulée sur un axe de rotation contre la dite lame fixe, la tête comprenant un ensemble d'entraînement de la lame mobile, l'ensemble d'entraînement comportant un organe entraîneur mobile angulairement et un organe entraîné mobile angulairement et se caractérise essentiellement en ce que l'organe entraîneur mobile angulairement est constitué par deux doigts identiques comportant chacun une surface de roulement ou de glissement et l'organe entraîné mobile angulairement comprenant un organe de roulement ou de glissement adapté pour coopérer avec les surfaces de roulement ou de glissement de l'organe entraîneur mobile angulairement.

D'autres avantages et caractéristiques apparaîtront dans la description qui va suivre d'une forme préférentielle de réalisation représentée aux dessins annexés donnés à titre d'exemple nullement limitatif dans lesquels :

La figure 1 est une vue de côté du sécateur selon l'invention,

La figure 2 est une vue en coupe de la figure 1,

La figure 3 est une vue schématique du dispositif de commande du sécateur selon l'invention.

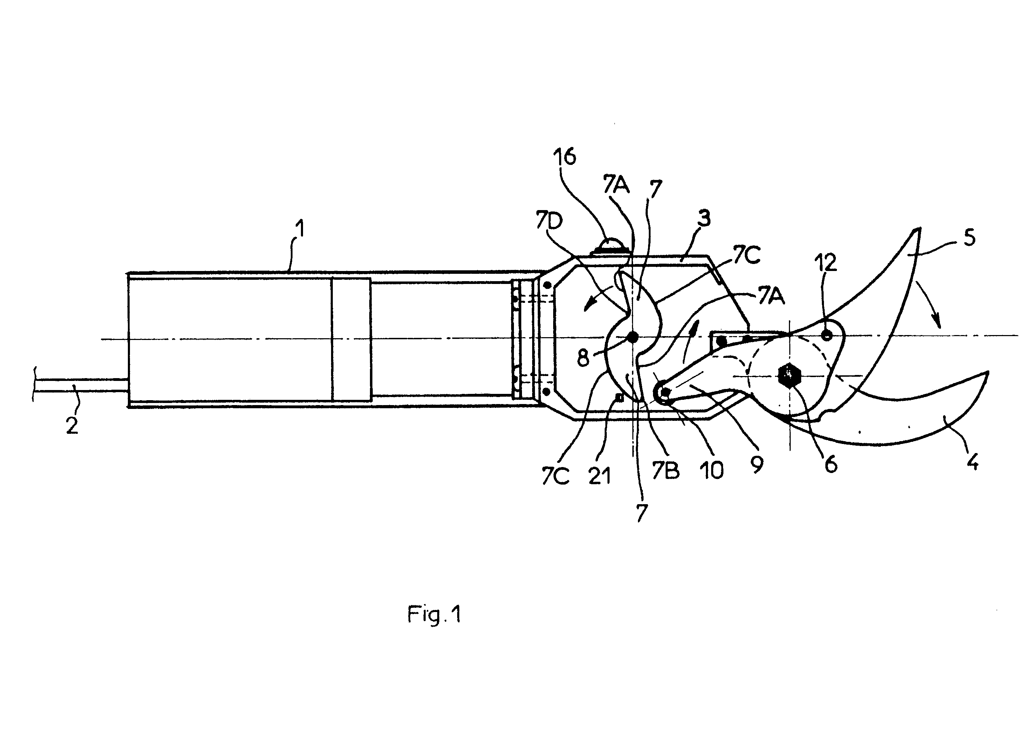

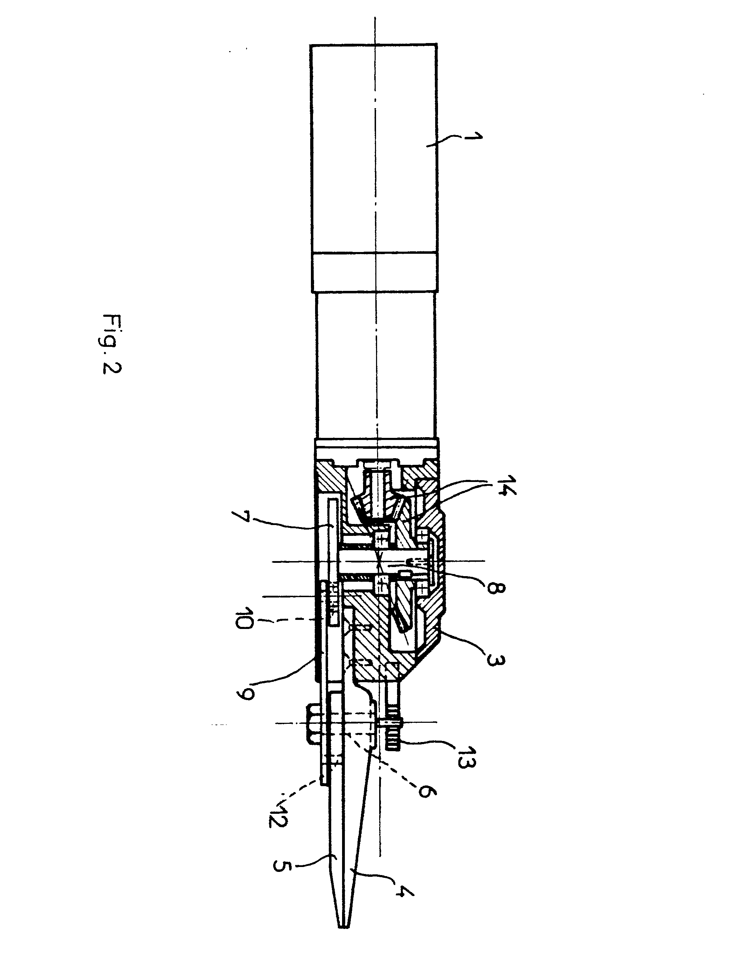

Le sécateur automatique pour la taille de la vigne, des arbres et autres selon l'invention et tel que représenté aux figures 1 et 2 est constitué par un corps creux 1 dans lequel est monté un moteur de préférence de type électrique et son réducteur (non représentés).

Le dit corps creux est également utilisé comme manche de maintien du sécateur.

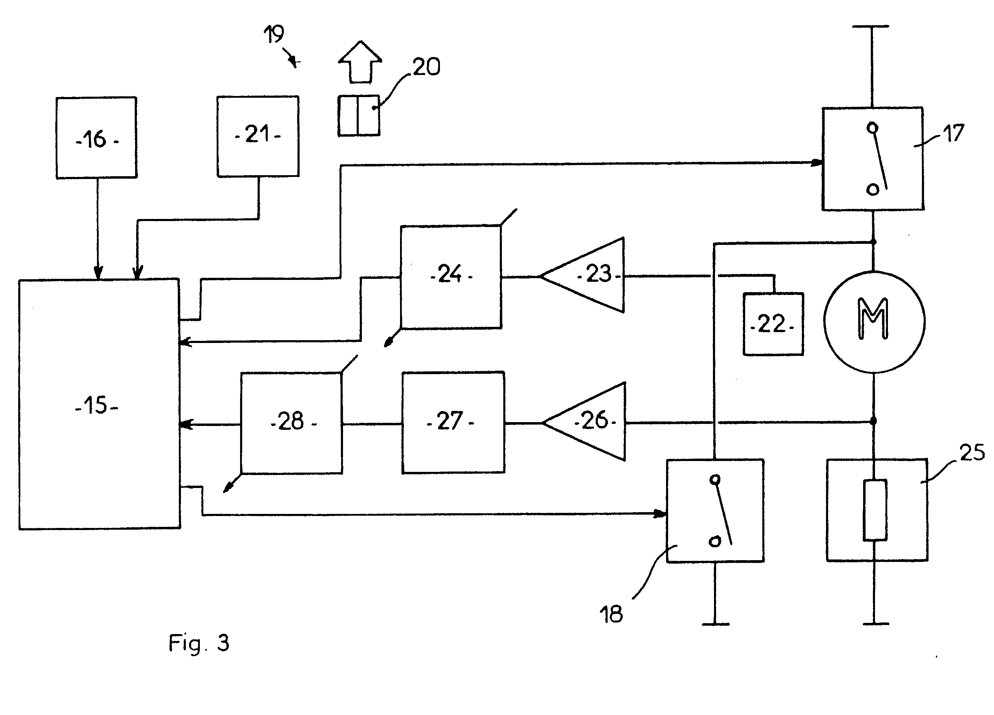

Le moteur électrique est commandé par un dispositif de commande représenté en figure 3 et qui sera décrit plus avant.

En arrière du corps creux débouche un cordon d'alimentation 2 du moteur.

De préférence, l'énergie électrique nécessaire au moteur est apportée par une batterie portable.

En avant du corps creux 1 et dans le prolongement longitudinal de celui-ci est fixée un tête 3 à l'extrémité de laquelle est montée une lame fixe 4.

Cette lame fixe 4 est, de préférence, du type des lames de sécateur manuel traditionnel, c'est à dire présentant une forme courbe sur laquelle le bord tranchant est concave.

Sur la tête 3 est également montée une lame mobile 5 articulée sur un axe de rotation 6 contre la lame fixe 4.

L'axe de rotation 6 est disposé perpendiculairement à l'axe longitudinal du corps creux 1.

La lame mobile 5 présente une forme classique avec son bord tranchant convexe sensiblement de même courbure que le bord tranchant de la lame fixe 4.

Dans la tête 3 du sécateur selon l'invention, est monté un ensemble d'entraînement de la lame mobile 5.

L'ensemble d'entraînement de la lame mobile 5 du sécateur selon l'invention comporte un organe entraîneur mobile angulairement et un organe entraîné mobile angulairement coopérant en entraînement l'un avec l'autre par l'intermédiaire d'au moins une surface de roulement ou de glissement ménagée sur l'organe entraîneur et respectivement d'au moins un organe de roulement ou de glissement porté par l'organe entraîné.

Préférentiellement, l'organe entraîneur est constitué par au moins un doigt 7, fixé radialement à l'extrémité d'un arbre 8 entraîné en rotation et l'organe entraîné est constitué par une queue 9 solidaire de la lame mobile 5 et comportant sur son extrémité arrière, un galet 10 destiné à coopérer en entraînement avec la tranche d'un doigt 7 mobile angulairement.

Avantageusement, l'organe entraîneur est constitué par deux doigts 7 identiques, fixés sur l'arbre 8, destinés à entraîner par leur tranche et l'un aprés l'autre, la queue 9 dotée du galet 10.

Les doigts 7 sont fixés radialement à l'extrémité de l'arbre 8 et de manière à être symétriques par rapport à un point défini par l'intersection des diamètres du dit arbre. Chaque doigt 7 comporte un face avant 7A sur laquelle roule sans glisser le galet 10.

Au cours de la rotation de l'arbre 8, le galet 10 de la queue 9 est pris par le sommet 7B d'un doigt 7 puis roule sur la surface avant 7A.

Le point de contact du galet 10 avec la face avant 7A au cours d'une partie de la rotation du doigt 7, se rapproche de l'axe de l'arbre 8.
A cet instant, le couple de coupe entre les lames mobile 5 et fixe 4 est maximum.

Ainsi, entre le point initial où le galet est pris en charge par le doigt 7 et le point où le centre du galet est disposé sur la droite passant par l'axe de l'arbre 8 et l'axe de rotation 6 de la lame mobile 5, le couple de coupe augmente de manière progressive en raison du fait que le point de contact entre le galet 10 et la face avant 7A se déplace sur un cercle dont le centre est l'axe d'articulation 6 de la lame mobile 5 et par conséquent, se rapproche de l'axe de l'arbre 8.
Le couple de coupe doit augmenter en raison du fait que la surface entre les lames et la matière à couper augmente au fur et à mesure de la pénétration des lames dans la matière.

Le couple de coupe doit être maximal lorsque les lames 4 et 5 sont en plein bois.
Le sectionnement total est réalisé par la poursuite de la rotation d'un doigt 7 au cours de laquelle le galet 10 de la queue 9 s'éloigne de l'axe de l'arbre 8 c'est à dire que l'axe du galet 10 sort de la droite passant par l'axe de l'arbre 8, et l'axe de rotation 6.

Au cours de la poursuite de la rotation, le galet roule sur la surface avant 7A vers le sommet du doigt 7.
Lorsque le galet 10 s'éloigne de l'axe de l'arbre 8, le couple de coupe sur les lames est moins important.
La fin du sectionnement de la matière ne nécessite pas d'importants efforts de coupe et donc le couple donné par l'entraînement de la queue 9 par le doigt 7 est moins important.

Préférentiellement, la face avant 7A est pratiquement confondue avec un diamètre de l'arbre 8.

Avantageusement, la dite face avant, peut comporter un léger bombage sur la partie proche du sommet 7B afin d'obtenir une légère augmentation de la vitesse de la lame mobile 5 au début de son entraînement.

Suivant une forme préférentielle de réalisation, la queue 9 est solidaire de la lame mobile 5 par un téton 12 placé dans un orifice ménagé dans la lame 5 et s'articule sur l'axe d'articulation 6 de la dite lame.

Lorsque la lame mobile 5 est complètement fermée, le galet 10 de la queue 9 est situé au sommet 7B du doigt 7.

La rotation du doigt 7 se poursuivant, le galet 10 sort de la face avant 7 et la lame doit être ramenée en position initiale, c'est à dire en position ouverte.

A cet effet, un ressort de rappel 13 à spirales ou autre est monté entre la lame mobile 5, l'axe d'articulation 6 et la tête 3.

Cependant, afin d'éviter un retour brusque de la lame mobile 5 en position ouverte entraînant un choc, le doigt 7 est doté d'une face arrière 7C bombée sur laquelle est maintenu appuyé, le galet 10 afin de rouler sur la dite surface de manière que la lame mobile soit retenue sur tout ou en partie de son trajet de retour en position initiale.

L'arbre 8 comporte comme énoncé précédemment, deux doigts 7 disposés symétriquement par rapport à un point.
Une surface de liaison 7D relie les surfaces arrières 7C aux surfaces avant 7A de l'autre doigt.
Préférentiellement cette surface est arrondie telle que représentée en figure 1 mais il va de soi qu'elle peut être de tout autre forme.
Avantageusement la queue 9 lors de son retour est arrêtée par une butée (non représentée) ménagée dans la tête 3 et de manière que le galet puisse toujours être pris par le sommet 7B des doigts.
Les dits doigts au nombre de deux, provoquent au cours d'une rotation de 360° de l'arbre 8 deux cycles de coupe identiques.

Cette disposition permet, avec le même nombre de coupes à la minute que les sécateurs électriques connus à ce jour, d'avoir une vitesse de rotation de l'arbre 8 deux fois plus petite, ce qui permet d'utiliser un rapport de réduction du double. Il en résulte le double de coupe avec la même puissance.

Il va de soi que sur un cycle de coupe la rotation de l'arbre 8 est continue et de vitesse uniforme.

De plus, cette diminution de la vitesse donne une plus grande puissance au sécateur et permet de réaliser une économie d'énergie.

La lame mobile 5 est actionnée dans un plan parallèle à l'axe longitudinal du corps creux 1 et les doigts 7 sont rotatifs dans ce même plan ou dans un plan proche parallèle.

Les doigts 7 sont portés par l'arbre 8 qui est disposé perpendiculairement à l'axe longitudinal du corps creux 1. Entre l'arbre de sortie du moteur et l'arbre 8, est donc monté dans la tête 3, un dispositif de transmission angulaire de mouvement de rotation.

Préférentiellement, ce dispositif est constitué par un couple conique 14 qui permet également de réduire encore la vitesse de rotation et donc de diminuer l'importance du réducteur du moteur.

Il va de soi que tout autre type de dispositif de transmission angulaire peut être monté dans la tête 3 par exemple un engrenage du type vis sans fin de couronne.

Comme énoncé précédemment, le moteur électrique du sécateur selon l'invention, est commandé par un dispositif de commande représenté en figure 3.

Ce dispositif de préférence électronique, permet de mettre en marche, d'arrêter et de freiner le moteur électrique.

Ce dispositif permet également d'assurer au moteur la plus grande durée de vie possible en le protégeant contre d'éventuelles surintensités et surchauffes.

D'autre part le dispositif de commande permet de définir une position initiale du départ des cycles toujours identiques.

Selon une forme préférentielle le dispositif de commande du sécateur selon l'invention comporte un ensemble de gestion d'informations 15, un bouton de commande 16 actionné par l'utilisateur, un interrupteur 17 de mise en marche et d'arrêt commandé par l'ensemble de gestion 15 en fonction de l'actionnement du bouton 16 et un interrupteur 18 d'un frein de court circuitage du moteur commandé par le dit ensemble de gestion.

Le dit bouton 16 est du type à poussoir et est disposé sur la tête 3 tel que représenté en figure 1.

Lorsque l'utilisateur actionne ce bouton 16 alors que le bouton est arrêté, l'ensemble de gestion 15 donne l'ordre de marche au dit moteur.

Ce bouton doit être maintenu appuyé pendant tout le cycle de coupe du sécateur.

On entend par cycle le mouvement de fermeture et d'ouverture de la lame mobile 5.

Lorsque le bouton 16 est relaché en cours de cycle l'ensemble de gestion donne l'ordre d'arrêt au moteur par l'intermédiaire de l'interrupteur 17 simultanément à l'ordre de freiner sur l'interrupteur 18.

Le freinage du moteur s'effectue par l'actionnement de l'interrupteur 18 qui a pour effet de court circuiter le moteur.

Ce court circuit est établi pendant un temps donné puis l'interrupteur 18 est relaché pour que le moteur puisse être remis en marche après l'écoulement du temps de court-circuit.

Ainsi à chaque relachement du bouton 16 lors d'un cycle de coupe, la lame mobile 5 est arrêtée et freinée afin que l'utilisateur puisse agir pendant la coupe sur la fermeture de la lame mobile 5 pour se prémunir de tout accident ou de toute fausse manoeuvre.

Chaque fin de cycle de coupe doit être détectée afin que la position initiale de la lame mobile 5 soit identique d'un cycle à l'autre.

A cet effet sur le dispositif de commande du moteur est connecté un moyen de détection 19 du retour en position initiale de la lame mobile 5 qui commande l'arrêt du moteur par l'intermédiaire de l'ensemble de gestion 15 et des interrupteurs 17 et 18.

Selon une forme préférentielle de réalisation ce moyen de détection 19 est constitué par un aimant 20 monté sur l'extrémité de chacun des doigts 7 et par un détecteur 21 de passage de l'aimant 20 placé dans la tête 3.

Le détecteur 21 est de préférence du type à effet Hall et a pour effet de commander par l'intermédiaire de l'ensemble de gestion 15 l'arrêt du moteur et son freinage par l'actionnement des interrupteurs 17 et 18.

L'ordre de remise en marche du moteur ne pourra être donné que lorsque le bouton 16 sera relaché puis actionné de nouveau. Ainsi les cycles de coupe sont identiques dans le temps puisque la vitesse de coupe est constante et la position initiale de début de cycle est toujours le même.

Il va de soi que le détecteur 21 est disposé à une distance du centre de l'arbre 8 égale à la distance séparant ce centre des aimants 20 disposés sur chacun des doigts 7. De plus le détecteur est disposé par rapport au cercle décrit par les doigts 7 sur une position angulaire telle que l'arrêt s'effectue lorsque le galet 10 n'est en prise avec aucun doigt 7 et que le dit arrêt soit réalisé après le passage de l'aimant 20 au dessus du détecteur 21 afin d'éviter une double détection.

Avantageusement le dispositif de commande reçoit également des moyens permettant de s'affranchir contre des incidents pouvant nuire au moteur.

Plus particulièrement le dispositif comporte des moyens pour détecter une surchauffe du moteur et des moyens pour détecter une surintensité d'alimentation du moteur.

Préférentiellement les moyens pour détecter une surchauffe du moteur sont constitués par une sonde thermique 22, un amplificateur opérationnel 23 et un étage comparateur 24 comparant par rapport à un seuil réglable la valeur issue de l'amplificateur 23.

L'étage comparateur 24 envoie une information à l'ensemble de gestion 15 lorsque une surchauffe est détectée, et le dit ensemble de gestion provoque l'arrêt et le freinage du moteur par les interrupteurs 17 et 18 quelle que soit la position de la lame mobile en cours de cycle.

Les moyens de détection de surintensité permettent de déceler lors d'un cycle de coupe un blocage de la lame mobile 5 qui peut endommager le moteur.

Ces moyens de détection de surintensité sont de préférence constitués par une résistance 25 disposée sur une borne du moteur, un amplificateur opérationnel 26 branché à une borne du moteur et de la résistance détectant l'intensité fournie au moteur et traitant en amplitude cette intensité, un intégrateur 27 recevant le signal issu de l'amplificateur 26 et envoyant un signal traité à un étage comparateur 27 à seuil réglable.

La résistance 25 permet de limiter le courant passant dans le moteur et de former un shunt permettant de mesurer l'intensité. Lorsque le seuil réglable est dépassé sur l'étage comparateur 27 un ordre d'arrêt et de freinage est donné par l'ensemble de gestion 15 pour arrêter le moteur afin d'éviter sa détèrioration.

Par ces moyens de protection sur le dispositif de commande le moteur du sécateur selon l'invention est protégé et lui est assuré une plus grande durée de vie.

Le sécateur selon l'invention présente une puissance de coupe trés grande avec une bonne efficacité dans chacun des cycles de coupe et une économie d'énergie ce qui lui permet d'avoir une autonomie supérieure à une journée de travail et d'être très facilement portable et présente une bonne sécurité et fiabilité.

Il va de soi que la présente invention peut recevoir tous aménagements et toutes variantes dans le domaine des équivalents techniques sans pour autant sortir du présent brevet.

## Revendications

1. Sécateur automatique pour la taille de la vigne, des arbres et autres, comportant un corps creux (1) dans lequel est monté un moteur avec son réducteur, une tête (3) montée sur l'extrémité du dit corps creux (1) et dans laquelle sont montées une lame fixe (4) et une lame mobile (5) articulée sur un axe de rotation (6) contre la lame fixe (4), la dite tête (3) comprenant un ensemble d'entraînement de la lame mobile (5), l'ensemble d'entraînement comportant un organe entraîneur mobile angulairement et un organe entraîné mobile angulairement, caractérisé en ce que l'organe entraîneur mobile angulairement est constitué par deux doigts (7) identiques comportant chacun une surface de roulement ou de glissement et l'organe entraîné mobile angulairement comprenant un organe de roulement ou de glissement adapté pour coopérer avec les surfaces de roulement ou de glissement de l'organe entraîneur mobile angulairement.

2. Sécateur automatique selon la revendication 1 caractérisé en ce que les doigts (7) sont fixés radialement à l'extrémité d'un arbre (8) entraîné en rotation et en ce que l'organe entraîné est constitué par une queue (9) solidaire de la lame mobile (5) et comportant sur son extrémité un galet (10) destiné à coopérer en entraînement avec la tranche d'un doigt (7) mobile angulairement.

3. Sécateur automatique selon les revendications 1 et 2 caractérisé en ce que les doigts (7) sont fixés radialement à l'extrémité de l'arbre (8) de manière à être symétriques par rapport à un point défini par l'intersection des diamètres du dit arbre afin d'avoir, pour un même nombre de coupe à la minute, une vitesse de rotation de l'arbre (8) deux fois plus petite permettant d'utiliser un rapport de réduction du double pour obtenir le double de coupes avec une puissance égale.

4. Sécateur automatique selon les revendications 1, 2 et 3 caractérisé en ce que chaque doigt (7) comporte un sommet (7B) qui au cours de la rotation de l'arbre (8) prend le galet (10) lors de la rotation de manière que le point de contact du galet (10) sur la face (7A) dans un premier temps, se rapproche de l'axe de l'arbre (8), ce qui correspond à une augmentation du couple de coupe sur la lame mobile (5) puis, dans un deuxième temps, s'éloigne du dit axe de l'arbre (8).

5. Sécateur automatique selon les revendications 1, 2 et 3 comportant un ressort de rappel (13) monté entre la lame mobile (5), l'axe d'articulation (6) et la tête (3), caractérisé en ce que les doigts (7) sont dotés d'une face arrière (7C) bombée sur laquelle est maintenu appuyé le galet (10) afin de rouler sur la dite surface de manière que la lame mobile (5) soit retenue sur tout ou en partie de son trajet de retour en position initiale.

6. Sécateur automatique selon les revendications 1 et 2 caractérisé en ce que entre l'arbre de sortie du moteur et l'arbre (8) est monté dans la tête (3) un dispositif de transmission angulaire de mouvement de rotation.

7. Sécateur automatique selon la revendication 1 comportant un dispositif de commande du moteur caractérisé en ce qu'il comporte un ensemble de gestion d'informations (15), un bouton de commande (16) actionné par l'utilisateur, un interrupteur (17) de mise en marche et d'arrêt commandé par l'ensemble de gestion (15) en fonction de l'actionnement du bouton (16) et un interrupteur (18) d'un frein de court circuitage du moteur commandé par le dit ensemble de gestion.

8. Sécateur automatique selon les revendications 1 et 7 caractérisé en ce que sur le dispositif de commande du moteur est connecté un moyen de détection (19) du retour en position initiale de la lame mobile (5) qui commande l'arrêt du moteur par l'intermédiaire de l'ensemble de gestion (15) et des interrupteurs (17) et (18).

9. Sécateur automatique selon les revendications 1 et 7 caractérisé en ce que le dispositif de commande comporte des moyens pour détecter une surintensité d'alimentation du moteur dans le cas de blocage de la lame mobile (5) et arrêter le moteur par l'intermédiaire de l'ensemble de gestion (15) et des interrupteurs (17) et (18).

10. Sécateur automatique selon les revendications 1 et 7 caractérisé en ce que le dispositif de commande comporte des moyens de détection de surchauffe du moteur entraînant l'arrêt du dit moteur par l'intermédiaire de l'ensemble de gestion (15) et des interrupteurs (17) et (18).

**Claims**

1. Automatic pruning scissors for pruning vines, trees and others, with a hollow body (1) in which is mounted a motor with its gear reducer, a head (3) mounted on the end of the previously mentioned hollow body (1) and in which is mounted a fixed blade (4) and a mobile blade (5) hinged on a rotation pin (6) against the fixed blade (4), the said head (3) includes a drive unit for the mobile blade (5); the drive unit includes an angularly moving drive device and an angularly moving driven device, characterized by the fact that the angularly moving drive device consists of two identical pawls (7) each with a sliding or running surface and the angularly mobile driven device includes a sliding or rolling device adapted to operate with the sliding or rolling surfaces of the angularly mobile drive device.

2. Automatic pruning scissors according to claim 1 characterized by the fact the pawls (7) are radially secured to the end of a rotated shaft (8) and that the driven device consists of a rod (9) secured to the mobile blade (5) and including, at its end, a roller (10) provided to help operation with the edge of an angularly mobile pawl (7).

3. Automatic pruning scissors according to claims 1 and 2 characterized by the fact that the pawls (7) are radially secured to the end of the shaft (8) so as to be symmetrical in relation to a point defined by the intersection of the diameters of the said shaft so, for a given number of cuts per minute, there is a shaft (8) rotation speed two times lower making it possible to use a double gear reduction ratio to obtain twice as many cuts of equal power.

4. Automatic pruning scissors according to claims 1, 2 and 3 characterized by the fact that each pawl (7) includes a top (7B) which, during shaft (8) rotation, picks up roller (10) during rotation so that the contact point of the roller (10) on side (7A) is initially closer to the center line of shaft (8) which corresponds to an increase in the cutting torque of the mobile blade (5) then, during a second movement, moves away from the said shaft (8) center line.

5. Automatic pruning scissors according to claims 1, 2 and 3 including a return spring (13) mounted between the mobile blade (5), the hinge pin (6) and the head (3) characterized by the fact that the pawls (7) are provided with a domed rear side (7C) on which the roller (10) is maintained held so as to roll over the said surface so that the mobile blade (5) is retained over all or part of its return movement to the initial position.

6. Automatic pruning scissors according to claims 1 and 2 characterized by the fact that between the motor output shaft and shaft (8) a rotary movement angular transmission device is mounted in head (3).

7. Automatic pruning scissors according to claim 1 including a motor control device characterized by the fact that it includes a computerized control system (15), a control push button (16), operated by the user, an on/off switch (17) controlled by the control system (15) as a function of the actuation of push button (16) and on/off switch (18) for short circuiting braking of the motor controlled by the said control system.

8. Automatic pruning scissors according to claims 1 and 7 characterized by the fact the motor control device is connected to a detection system (19) for mobile blade (7) return to initial position which controls motor stopping by means of the control system (15) and switches (17) and (18).

9. Automatic pruning scissors according to claims 1 and 7 characterized by the fact that control system includes a means to detect motor power supply overcurrent in the event of mobile blade (5) blocking which stops the motor by means of the control system (15) and switches (17) and (18).

10. Automatic pruning scissors according to claims 1 and 7 characterized by the fact that the control device includes motor overheating detection means causing stopping of the said motor by means of the control system (15) and switches (17) and (18).

## Patentansprüche

1. Automatische Schere zum Beschneiden von Reben, Bäumen und sonstigen Pflanzen, mit einem Hohlkörper (1), in den ein Motor mit Untersetzungsgetriebe montiert ist, mit einem Kopf (3), der am Ende des besagten Hohlkörpers (1) montiert ist und in dem eine feste Klinge (4) und eine bewegliche Klinge (5) befestigt sind, wobei die bewegliche Klinge (5) an einer Drehachse (6) gegen die feste Klinge (4) gelenkig angeordnet ist, wobei der besagte Kopf (3) eine Antriebseinheit der beweglichen Klinge (5) enthält und die Antriebseinheit ein bewegliches Antriebsorgan und ein winkelmäßig bewegliches, angetriebenes Organ enthält, dadurch gekennzeichnet, daß das winkelig bewegliche Antriebsorgan aus zwei gleichen Knaggen (7) besteht, die je eine Roll- oder Gleitfläche enthalten, und das winkelmäßig bewegliche, angetriebene Organ ein Roll- oder Gleitorgan enthält, das geeignet ist, mit den Roll- oder Gleitflächen des winkelmäßig beweglichen Antriebsorgans zusammenzuwirken.

2. Automatische Pflanzenschere gemäß Anspruch 1, dadurch gekennzeichnet, daß die Knaggen (7) radial am Ende einer Welle (8) befestigt sind, die in Drehrichtung angetrieben wird, und daß das angetriebene Organe aus einem Schaft (9) besteht, der mit der beweglichen Klinge (5) fest verbunden ist und an seinem Ende eine Rolle (10) enthält, die dafür bestimmt ist, mit der Kante einer winkelmäßig beweglichen Knagge (7) zusammenzuwirken.

3. Automatische Schere gemäß Anspruch 1 und 2, dadurch gekennzeichnet, daß die Knaggen (7) am Ende der Welle (8) befestigt sind, so daß sie in bezug auf einen durch den Schnittpunkt der Durchmesser der besagten Welle definierten Punkt symmetrisch sind, um für eine gleiche Anzahl Schnitte pro Minute die halbe Drehzahl der Welle (8) zu haben, was die Verwendung einer doppelten Übersetzung gestattet, um bei gleicher Leistung die doppelten Schnitte zu erhalten.

4. Automatische Schere gemäß Anspruch 1, 2 und 3, dadurch gekennzeichnet, daß jede Knagge (7) eine Spitze (7B) enthält, die im Lauf der Drehung der Welle (8) die Rolle (10) während der Drehung so aufgreift, daß der Kontaktpunkt der Rolle (10) an der Seite (7A) sich in einem ersten Abschnitt der Achse der Welle (8) nähert, was einer Zunahme des Schneidmoments an der beweglichen Klinge (5) entspricht, und sich dann in einem zweiten Abschnitt von der besagten Wellenachse (8) entfernt.

5. Automatische Schere gemäß Anspruch 1, 2 und 3 mit einer Rückstellfeder (13), die zwischen der beweglichen Klinge (5) der Gelenkachse (6) und dem Kopf (3) montiert ist, dadurch gekennzeichnet, daß die Kanggen (7) mit einer gewölbten Rückseite (7C) versehen sind, auf der die Rolle (10) angedrückt gehalten wird, um auf der besagten Oberfläche so zu rollen, daß die bewegliche Klinge (5) über den ganzen Rückweg oder über einen Teil davon in der Ausgangsposition zurückgehalten wird.

6. Automatische Schere gemäß Anspruch 1 und 2, dadurch gekennzeichnet, daß zwischen der Ausgangswelle des Motors und der Welle (8) in den Kopf (3) eine Vorrichtung für die winkelmäßige Übertragung der Drehbewegung montiert ist.

7. Automatische Schere gemäß Anspruch 1 mit einer Steuervorrichtung des Motors, dadurch gekennzeichnet, daß sie eine Informationsverwaltungseinheit (15), einen Bedienungskopf (16), der vom Benutzer betätigt wird, einen Schalter (17) zum Ein- und Ausschalten, der durch die Steuereinheit (15) je nach Betätigung des Knopfes (16) gesteuert wird, und einen Schalter (18) für eine Kurzschlußbremse des Motors, die durch die besagte Verwaltungseinheit gesteuert wird, enthält.

8. Automatische Schere gemäß Anspruch 1 und 7, dadurch gekennzeichnet, daß an der Steuervorrichtung des Motors ein Detektionsmittel (19) für die Rückkehr der beweglichen Klinge (5) in die Ausgangsposition angeschlossen ist, die die Abschaltung des Motors über die Verwaltungseinheit (15) und die Schalter (17) und (18) steuert.

9. Automatische Schere gemäß Anspruch 1 und 7, dadurch gekennzeichnet, daß die Steuervorrichtung Mittel enthält, um einen Überstrom in der Versorgung des Motors zu erkennen, wenn die bewegliche Klinge (5) blockiert wird und um den Motor über die Steuereinheit (15) und die Schalter (17) und (18) auszuschalten.

10. Automatische Schere gemäß Anspruch 1 und 7, dadurch gekennzeichnet, daß die Steuervorrichtung Mittel für die Detektion einer Überhitzung des Motors enthält, die die Abschaltung des besagten Motors über die Steuereinheit (15) und die Schalter (17) und (18) nach sich ziehen.

Fig. 1

Fig. 2

Fig. 3